# EUROPÄISCHE PATENTSCHRIFT

(11) **EP 1 420 969 B1**
(45) Veröffentlichungstag und Bekanntmachung des Hinweises auf die Patenterteilung: **10.11.2004**
(21) Anmeldenummer: 02754986.4
(22) Anmeldetag: 08.08.2002
(51) Int. Cl.: B60J 7/12, B60J 7/20

(54) **FAHRZEUGDACH MIT EINEM ZWISCHEN SCHLIESSPOSITION UND ÖFFNUNGSPOSITION VERSTELLBAREN VERDECK**
VEHICLE ROOF COMPRISING A FOLDING TOP WHICH CAN BE DISPLACED BETWEEN A CLOSING POSITION AND AN OPENING POSITION
TOIT DE VEHICULE MUNI D'UNE CAPOTE DEPLA ABLE ENTRE UNE POSITION FERMEE ET UNE POSITION OUVERTE

(30) Priorität: 28.08.2001 DE 10141312
(43) Veröffentlichungstag der Anmeldung: 26.05.2004
(73) Patentinhaber: CTS Fahrzeug-Dachsysteme GmbH, 21079 Hamburg (DE)
(72) Erfinder: HESS, Rainer, 72336 Balingen-Ostdorf (DE); KABACHE, Sébastien, 78100 St-Germain-en-Laye (FR); MANGOLD, Artur, 72172 Sulz-Mühlheim (DE)
(74) Vertreter: Müller, Gottfried
(86) Internationale Anmeldenummer: PCT/EP2002/008873
(87) Internationale Veröffentlichungsnummer: WO 2003/020543

(56) Entgegenhaltungen:
- EP-A- 0 806 313
- EP-A- 1 108 581
- EP-A- 1 110 782
- DE-A- 4 106 732
- DE-A- 19 613 917

## Beschreibung

Die Erfindung bezieht sich auf ein Fahrzeugdach mit einem zwischen Schließposition und Öffnungsposition verstellbaren Verdeck nach dem Oberbegriff des Anspruches 1.

Aus der Druckschrift DE 196 43 225 C1 ist ein Fahrzeugdach bekannt, welches als zusammenhängendes Modul mit einem verstellbaren Fahrzeugverdeck, einem Überrollbügel sowie einer Verdeckablage ausgebildet ist, in der das Fahrzeugverdeck in Öffnungsposition zu verstauen ist. Die Verdeckablage ist von einem etwa U-förmigen Tragrahmen eingefasst, welcher zugleich Träger des Verdeckes sowie des Überrollbügels ist. Die offene U-Seite des Tragrahmens erstreckt sich zur Fahrzeugvorderseite hin und wird in Einbauposition des Moduls von einer karosseriefesten Fahrzeugrückwand zwischen dem Fahrzeuginnenraum und dem Kofferraum begrenzt. In der Einbauposition bildet das Verdeck einen Teil der Karosserie im Kofferraumbereich des Fahrzeuges. Um eine ausreichend hohe Verwindungssteifigkeit gegenüber Torsionen um die Längsachse zu erreichen, ist es erforderlich, die Seitenschenkel des Tragrahmens mit ausreichender Sicherheit an der Fahrzeugkarosserie zu fixieren.

Ein weiteres Fahrzeugdach, welches mit der Verdeckablage ein zusammenhängendes, vormontierbares Modul bildet, ist aus der Druckschrift DE 199 49 960 C2 bekannt. Fahrzeugdach und Verdeckablage sind an einen Querrahmen gekoppelt, der das tragende Bauteil in dem Modul darstellt und durch den Schwerpunkt des Moduls geführt ist und über den der größte Teil der Gewichtskräfte sowie der aus der Stellbewegung resultierenden Reaktionskräfte auf die Fahrzeugkarosserie übertragen wird. Die Position durch den Modulschwerpunkt erfordert konstruktive Anpassungen im Hinblick auf das Dach, die Dachkinematik und die Verdeckablage. Liegt der Querrahmen außerhalb des Modulschwerpunkts, wirken zusätzliche Kräfte auf die Fahrzeugkarosserie und auf das Modul, die zu einer Verringerung der Stabilität führen können und verstärkte Befestigungsvorrichtungen erforderlich machen.

Von diesem Stand der Technik ausgehend liegt der Erfindung das Problem zugrunde, ein auf einem Tragrahmen vormontiertes Fahrzeugverdeck zu schaffen, das in Einbaulage die Gesamtsteifigkeit der Fahrzeugkarosserie verbessert und insbesondere auch die Verwindungssteifigkeit erhöht.

Dieses Problem wird erfindungsgemäß mit den Merkmalen des Anspruches 1 gelöst. Die Unteransprüche geben zweckmäßige Weiterbildungen an.

Der Tragrahmen ist als umlaufendes, geschlossenes Profil mit einem vorderen Querträger, einem hinteren Querträger sowie zwei die Querträger verbindenden Seitenteilen ausgebildet. Das umlaufende Profil verbessert in signifikanter Weise die Steifigkeit, insbesondere die Verwindungssteifigkeit des Fahrzeuges sowohl in Querrichtung als auch in Längsrichtung. Der Tragrahmen stellt somit ein tragendes und strukturverbesserndes Teil der Fahrzeugkarosserie dar, was die Möglichkeit eröffnet, tragfähige Bauteile der Fahrzeugkarosserie zugunsten des Tragrahmens zu reduzieren. Die Fahrzeugkarosserie kann insgesamt schwächer ausgeführt sein, da der Tragrahmen auch Tragfunktionen der Karosserie übernimmt. Auf Grund der geschlossenen Struktur des Tragrahmens wird die Steifigkeit gleichermaßen in Quer- als auch in Längsrichtung verbessert.

Auf Grund der umlaufenden Form des Tragrahmens, welcher in Draufsicht vorteilhaft etwa rechteckförmig ausgeführt ist, ist es möglich, den Tragrahmen als Begrenzungselement für einen heckseitigen Raum, insbesondere den Kofferraum oder den Verdeckkasten auszubilden. Hierbei sitzt der Tragrahmen vorteilhaft auf den Seitenwänden des Kofferraumes auf.

An dem Tragrahmen kann gegebenenfalls auch ein fest mit diesem verbundenes Wandteil gehalten sein, insbesondere ein mit dem vorderen Querträger des Tragrahmens verbundenes und sich unterhalb des Querträgers erstreckendes Wandteil, welches eine Rückwand oder einen Teil einer Rückwand zwischen Fahrzeuginnenraum und Kofferraumbereich bildet. Vorderer Querträger und Wandteil bilden insgesamt ein gemeinsames Vorderteil des Tragrahmens.

Des Weiteren kann es zweckmäßig sein, an dem hinteren Querträger des Tragrahmens eine Heckdeckelkinematik einschließlich dem Heckdeckel selbst zu befestigen. Tragrahmen und Heckdeckel mit Heckdeckelkinematik bilden ein Modul, das vor dem Einsetzen in das Fahrzeug vormontiert und auf Funktionsfähigkeit überprüft werden kann.

Am vorderen Querträger können Hauptlager für die Dachkinematik angeordnet sein, wobei gegebenenfalls auch die Dachkinematik einschließlich des Fahrzeugverdecks vor dem Einbau des Tragrahmens in das Fahrzeug vormontiert und deren Funktion überprüft werden kann. Tragrahmen, Fahrzeugverdeck mit Dachkinematik und Heckdeckel mit Heckdeckelkinematik können in dieser Ausführung ein vormontiertes Modul bilden, dem gegebenenfalls auch die Antriebstechnik - hydraulische Stellelemente, Elektromotoren, Steuerungseinrichtungen - für die Bewegung des Fahrzeugverdecks und gegebenenfalls auch des Heckdeckels zugeordnet sein können; auch der Überrollbügel kann am Tragrahmen gehalten und Teil des Moduls sein, wobei die Anbindung des Überrollbügels am Tragrahmen sowohl starr als auch beweglich erfolgen kann.

Der vordere Querträger ist zweckmäßig als Gussteil ausgeführt, insbesondere als Aluminium-Druckguss, was den Vorteil einer hohen Steifigkeit bei gleichzeitig verhältnismäßig geringem Gewicht bietet. Das Gussteil kann außerdem in der gewünschten Geometrie gegossen werden, wobei bereits im Gießvorgang geringe Toleranzen eingehalten werden können, so dass in der Regel nur Verbindungsstellen zur Fahrzeugkarosserie und/oder zum Fahrzeugverdeck nachbearbeitet werden müssen. Der hintere Querträger und auch die Seitenteile sind vorteilhaft als Blechteile ausgeführt und bestehen insbesondere aus Stahlblech.

Weitere Vorteile und zweckmäßige Ausführungen sind den weiteren Ansprüchen, der Figurenbeschreibung und den Zeichnungen zu entnehmen. Es zeigen:
- Fig. 1: eine perspektivische Ansicht eines Fahrzeugverdeckes in Schließposition, wobei das Fahrzeugverdeck auf einem umlaufenden Tragrahmen gehalten ist, an dessen hinterem Querträger eine Heckdeckelkinematik zur Aufnahme eines Heckdeckels angeordnet ist,
- Fig. 2: eine perspektivische Ansicht des Tragrahmens in Einbaulage im Kofferraum des Fahrzeuges,
- Fig. 3: eine schematische Darstellung des Tragrahmens mit Hauptlagern am vorderen Querrahmen zur Aufnahme der Dachkinematik, seitlichen Schlosseinrichtungen zum Verriegeln des Heckdeckels in Schließposition sowie Gelenkanordnungen am hinteren Querträger, über die der Heckdeckel mit dem Tragrahmen verbunden ist,
- Fig. 4: einen Längsschnitt durch den Kofferraumbereich mit abgelegtem Fahrzeugverdeck.

In folgenden Figuren sind gleiche Bauteile mit gleichen Bezugszeichen versehen.

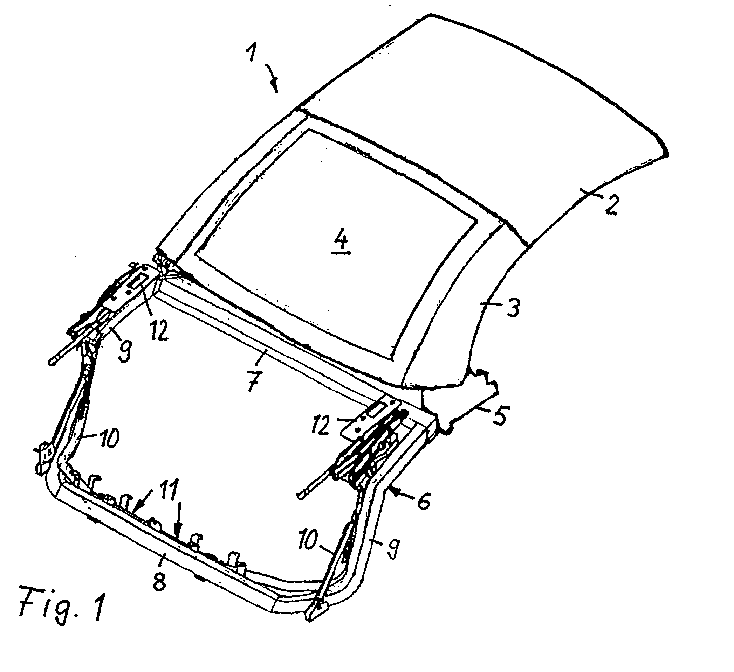

Bei dem in Fig. 1 dargestellten Fahrzeugdach handelt es sich zweckmäßig um ein Hardtop-Fahrzeugverdeck 1 mit einem vorderen Dachteil 2 und einem hinteren Dachteil 3, in das eine Heckscheibe 4 integriert ist, wobei die Dachteile 2 und 3 als in sich starre Dachschalen ausgeführt sind.

Das Fahrzeugverdeck 1 kann gegebenenfalls aber auch als Softtop mit einem von einem Verdeckgestänge getragenen Verdeck-Bezugstoff ausgeführt sein.

Das Fahrzeugverdeck 1 ist über seine Dachkinematik an einem Hauptlager 5 beweglich gehalten, das an einem Tragrahmen 6 befestigt ist. Der Tragrahmen 6 ist zweckmäßig ein Bestandteil des Fahrzeugdaches und bildet mit dem Fahrzeugverdeck 1 ein gemeinsames Modul, welches als vormontierte Einheit in das Fahrzeug einsetzbar ist. Der Tragrahmen 6 ist als umlaufendes, geschlossenes Profil ausgeführt, welches in Draufsicht etwa rechteckförmig ausgebildet ist. Der Tragrahmen 6 erstreckt sich in der in Fig. 1 gezeigten Schließstellung des Fahrzeugverdeckes 1 auf der dem Fahrzeugheck zugewandten Seite des Fahrzeugdaches und umgrenzt einen Verdeckkasten, in welchem das Fahrzeugverdeck in Öffnungsposition abgelegt ist, bzw. einen Kofferraum, welcher einen derartigen Verdeckkasten oder Stauraum umfasst bzw. mit diesem identisch ist. Der Tragrahmen 6 besteht aus einem vorderen, dem Fahrzeuginnenraum benachbarten Querträger 7, einem hinteren, dem Fahrzeugheck zugewandten Querträger 8 sowie zwei seitlichen, die Querträger 7, 8 verbindende Seitenteile 9. Der vordere Querträger 7 ist zweckmäßig als Gussteil ausgeführt, beispielsweise als Aluminium-Druckgussteil, wohingegen der hintere Querträger 8 und die Seitenteile 9 als Blechteile ausgeführt sind und insbesondere aus Stahlblech gefertigt sind. Der Tragrahmen 6 ist zu einer Längsmittelachse des Fahrzeuges symmetrisch ausgebildet.

Am vorderen Querträger 7 sind in dessen Seitenbereichen die Hauptlager 5 für die Dachkinematik des Fahrzeugverdeckes 1 angeordnet. Am hinteren Querträger 8 ist über Gelenke 11 eine Heckdeckelkinematik 10 eines nicht dargestellten Heckdeckels schwenkbar gelagert. Des Weiteren sind an den Seitenteilen 9, benachbart zum vorderen Querträger 7, Schlosseinrichtungen 12 am linken und rechten Seitenteil gehalten, welche in Schließstellung des Heckdeckels mit korrespondierenden Schlossteilen an der Heckdeckelvorderseite zusammenwirken, wodurch der Heckdeckel im geschlossenen Zustand sicher zu verriegeln ist.

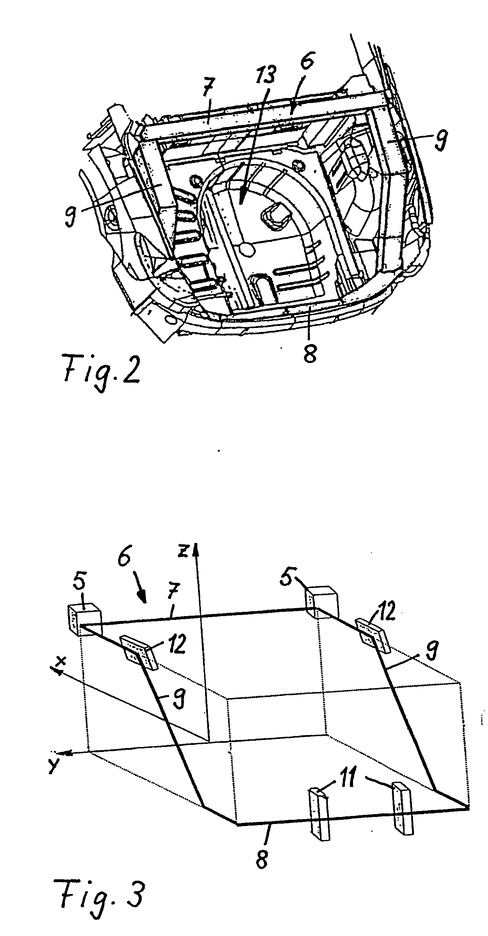

Fig. 2 zeigt den Kofferraum 13 des Fahrzeuges mit dem eingesetzten Tragrahmen 6 einschließlich vorderem Querträger 7, hinterem Querträger 8 sowie den Seitenteilen 9. Vorderer Querträger 7 und hinterer Querträger 8 befinden sich auf einem unterschiedlichen Höhenniveau, da der Kofferraum auf der Heckseite eine niedrige Ladekante aufweist, die das Beladen und Entladen des Kofferraumes erleichtert, und der vordere Querträger 7 demgegenüber nach oben versetzt angeordnet ist. Der Tragrahmen 6 umgrenzt den Kofferraum und liegt auf den Kofferraumwänden auf, welche einen Teil der Fahrzeugkarosserie bilden. Hierdurch wird die Gesamtsteifigkeit des Fahrzeuges verbessert. Der Niveauunterschied zwischen vorderem Querträger 7 und hinterem Querträger 8 wird durch teilweise schräg verlaufende Abschnitte der Seitenteile 9 des Tragrahmens 6 kompensiert, siehe hierzu auch Fig. 3.

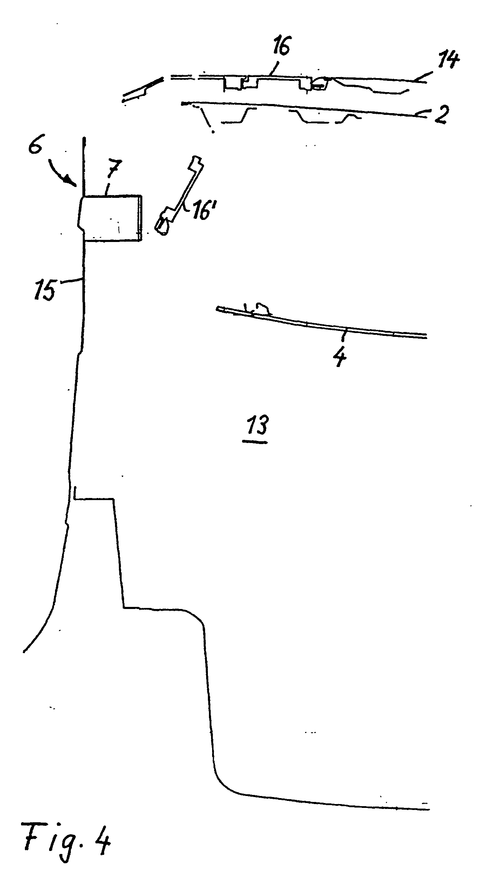

Der Schnittdarstellung gemäß Fig. 4 ist zu entnehmen, dass der vordere Querträger 7 fest mit einem Wandteil 15 verbunden sein und mit diesem ein gemeinsames Vorderteil bilden kann, wobei das Wandteil 15 eine Rückwand im Fahrzeug zwischen dem Fahrzeuginnenraum und dem Kofferraum 13 bildet. In Fig. 4 ist das Fahrzeugverdeck in seiner Öffnungsposition gezeigt, in der das Verdeck im Ablageraum bzw. im Kofferraum 13 abgelegt ist; dargestellt ist die Heckscheibe 4 sowie das vordere Dachteil 2 des Fahrzeugverdeckes in abgelegter Position. In dieser Position ist der Heckdeckel 14 geschlossen und grenzt an ein verstellbares Abdeckteil 16 an, welches sich insbesondere in den Endpositionen des Fahrzeugverdeckes - in Schließstellung und in Ablage- bzw. Öffnungsposition - in einer Ebene mit dem geschlossenen Heckdeckel 14 erstreckt und einen Durchtritt zum Kofferraum bzw. Ablageraum verschließt, durch den das Fahrzeugverdeck während der Überführungsbewegung zwischen Ablageposition und Schließposition hindurchgeführt wird. Während der Überführungsbewegung befindet sich das Abdeckteil zweckmäßig in der mit 16' gekennzeichneten Position innerhalb des Kofferraumes 13, benachbart zum Querträger 7. Das Abdeckteil 16 bildet in seiner den Durchtritt versperrenden Schließposition zweckmäßig eine Hutablage.

## Patentansprüche

1. Fahrzeugdach mit einem zwischen Schließposition und Öffnungsposition verstellbaren Verdeck (1), dessen Verdeckteile einschließlich der Verdeckkinematik an einem Aggregateträger gehalten sind, der mit der Fahrzeugkarosserie verbunden ist,
**dadurch gekennzeichnet,**
**dass** der Aggregateträger als umlaufender, geschlossener Tragrahmen (6) mit einem vorderen Querträger (7), einem hinteren Querträger (8) und zwei die Querträger (7 und 8) verbindenden Seitenteilen (9) ausgebildet ist.

2. Fahrzeugdach nach Anspruch 1,
**dadurch gekennzeichnet,**
**dass** der Tragrahmen (6) die Begrenzung des Kofferraumes (13) des Fahrzeuges bildet.

3. Fahrzeugdach nach Anspruch 1 oder 2,
**dadurch gekennzeichnet,**
**dass** der Tragrahmen (6) auf Seitenwänden des Kofferraumes (13) aufsitzt.

4. Fahrzeugdach nach einem der Ansprüche 1 bis 3,
**dadurch gekennzeichnet,**
**dass** an dem hinteren Querträger (8) des Tragrahmens (6) ein Heckdeckel (14) mit einer Heckdeckelkinematik gehalten ist.

5. Fahrzeugdach nach einem der Ansprüche 1 bis 4,
**dadurch gekennzeichnet,**
**dass** der vordere Querträger (7) als Gussteil ausgeführt ist.

6. Fahrzeugdach nach einem der Ansprüche 1 bis 5,
**dadurch gekennzeichnet,**
**dass** die Seitenteile (9) als Blechteile ausgeführt sind.

7. Fahrzeugdach nach einem der Ansprüche 1 bis 6,
**dadurch gekennzeichnet,**
**dass** der hintere Querträger (8) als Blechteil ausgeführt ist.

8. Fahrzeugdach nach einem der Ansprüche 1 bis 7,
**dadurch gekennzeichnet,**
**dass** am vorderen Querträger (7) Hauptlager (5) für die Dachkinematik angeordnet sind.

9. Fahrzeugdach nach einem der Ansprüche 1 bis 8,
**dadurch gekennzeichnet,**
**dass** an den Seitenteilen (9) Schlosseinrichtungen (12) für den Heckdeckel (14) angeordnet sind.

10. Fahrzeugdach nach einem der Ansprüche 1 bis 9,
**dadurch gekennzeichnet,**
**dass** der vordere Querträger (7) gemeinsam mit einem Wandteil (15), welches mit dem Querträger (7) verbunden ist, ein Vorderteil des Tragrahmens (6) bildet.

## Claims

1. Vehicle roof comprising a folding top (1) which can be displaced between a closing position and an opening position and the folding-top parts of which, including the folding-top kinematics, are held on a unit support which is connected to the vehicle body, **characterized in that** the unit support is designed as an encircling, closed supporting frame (6) having a front transverse support (7), a rear transverse support (8) and two side parts (9) connecting the transverse supports (7 and 8).

2. Vehicle roof according to Claim 1, **characterized in that** the supporting frame (6) forms the boundary of the boot (13) of the vehicle.

3. Vehicle roof according to Claim 1 or 2, **characterized in that** the supporting frame (6) sits on side walls of the boot (13).

4. Vehicle roof according to one of Claims 1 to 3, **characterized in that** a rear lid (14) is held on the rear transverse support (8) of the supporting frame (6) by rear-lid kinematics.

5. Vehicle roof according to one of Claims 1 to 4, **characterized in that** the front transverse support (7) is designed as a cast part.

6. Vehicle roof according to one of Claims 1 to 5, **characterized in that** the side parts (9) are designed as sheet-metal parts.

7. Vehicle roof according to one of Claims 1 to 6, **characterized in that** the rear transverse support (8) is designed as a sheet-metal part.

8. Vehicle roof according to one of Claims 1 to 7, **characterized in that** main bearings (5) for the roof kinematics are arranged on the front transverse support (7).

9. Vehicle roof according to one of Claims 1 to 8, **characterized in that** lock devices (12) for the rear lid (14) are arranged on the side parts (9).

10. Vehicle roof according to one of Claims 1 to 9, **characterized in that** the front transverse support (7) together with a wall part (15) which is connected to the transverse support (7) forms a front part of the supporting frame (6).

## Revendications

1. Toit de véhicule doté d'une capote (1) déplaçable entre une position de fermeture et une position d'ouverture et dont les pièces de capote, y compris la cinématique de capote, sont maintenues sur un support de l'ensemble qui est relié à la carrosserie du véhicule,
**caractérisé en ce que** le support de l'ensemble est configuré comme cadre de support (6) périphérique fermé doté d'un support transversal avant (7), d'un support transversal arrière (8) et de deux pièces latérales (9) qui relient les supports transversaux (7 et 8).

2. Toit de véhicule selon la revendication 1, **caractérisé en ce que** le cadre de support (6) forme la frontière de l'espace (13) du coffre du véhicule.

3. Toit de véhicule selon la revendication 1 ou 2, **caractérisé en ce que** le cadre de support (6) s'appuie sur des parois latérales de l'espace (13) du coffre.

4. Toit de véhicule selon l'une quelconque des revendications 1 à 3, **caractérisé en ce qu'**un hayon arrière (14) doté d'une cinématique de hayon arrière est soutenu sur le support transversal arrière (8) du cadre de support (6).

5. Toit de véhicule selon l'une quelconque des revendications 1 à 4, **caractérisé en ce que** le support transversal avant (7) est réalisé sous la forme d'une pièce coulée.

6. Toit de véhicule selon l'une quelconque des revendications 1 à 5, **caractérisé en ce que** les pièces latérales (9) sont configurées sous la forme de pièces en tôle.

7. Toit de véhicule selon l'une quelconque des revendications 1 à 6, **caractérisé en ce que** le support transversal arrière (8) est configuré sous la forme d'une pièce en tôle.

8. Toit de véhicule selon l'une quelconque des revendications 1 à 7, **caractérisé en ce que** des paliers principaux (5) de la cinématique de toit sont disposés sur le support transversal avant (7).

9. Toit de véhicule selon l'une quelconque des revendications 1 à 8, **caractérisé en ce que** des dispositifs de serrure (12) pour le hayon arrière (14) sont disposés sur les pièces latérales (9).

10. Toit de véhicule selon l'une quelconque des revendications 1 à 9, **caractérisé en ce que** le support transversal avant (7) forme avec une pièce de paroi (15) qui est reliée au support transversal (7) une partie avant du cadre de support (6).
